# FASCICULE DE BREVET EUROPEEN

(11) **EP 0 476 080 B1**
(45) Date de publication et mention de la délivrance du brevet: **17.01.1996**
(21) Numéro de dépôt: 91905100.3
(22) Date de dépôt: 04.03.1991
(51) Int. Cl.: F16D 3/84

(54) **SOUFFLET DE PROTECTION A MONTAGE RAPIDE POUR JOINTS DE TRANSMISSION**
SCHNELLMONTIERTER FALTENBALG ALS SCHUTZ FÜR UNIVERSALGELENK
RAPID-ASSEMBLY PROTECTIVE BELLOWS FOR UNIVERSAL JOINTS

(30) Priorité: 07.03.1990 BE 9000251
(43) Date de publication de la demande: 25.03.1992
(73) Titulaire: S.A. BRIAN TECHNICS, B-9700 Oudenaarde (BE)
(72) Inventeur: VAN STEENBRUGGE, Marcel, B-9790 Wortegem-Petegem (BE)
(86) Numéro de dépôt international: EP9100403
(87) Numéro de publication internationale: WO9114109

(56) Documents cités:
- DE-C- 706 519
- US-A- 4 558 869

## Description

La présente invention se rapporte en général à un soufflet d'échanchéité à montage rapide pour la protection de joints de transmission, de guidage et de direction possédant une fermeture longitudinale étanche et convenant en particulier pour les articulations à cardan de véhicules.

L'invention concerne plus particulièrement un soufflet de protection à montage rapide pour transmission homocinétique dite de CARDAN pour véhicules automobiles, comprenant deux corps en demi-coquille qui s'assemblent entre-eux par un système d'emboîtement et simultanément par encollage.

Sur les véhicules automobiles, le soufflet de cardan par sa conception hermétique est étanche à la graisse ou à l'huile et permet la protection de ce dernier contre la détérioration et la corrosion. Le soufflet de cardan traditionnel, en une seule pièce, nécessite qu'il soit posé au montage de la transmission et son remplacement dans le cas d'une défectuosité, par exemple coupure ou porosité, oblige l'intervenant à la dépose de la transmission, ce qui nécessite une perte importante de temps.

On a déjà préconisé pour remédier à cet inconvénient de réaliser un soufflet de protection possédant une fermeture obturateure à encliquement. Un tel soufflet à montage rapide est connu par exemple du brevet américain US-A-4558869.

L'ensemble de ces modèles se présente ouvert dans le sens longitudinal, pour permettre le passage de l'arbre de transmission sans nécessité de dépose du cardan, et s'assemble par un système d'emboîtement en " U " et languette, le tout rendu étanche par soudure ou encollage. De conception tradionnelle le joint en U et patte insérée a le désavantage de provoquer localement une surépaisseur et un changement brusque de la rigidité du soufflet. Ces fermetures ont nécessairement une flexibilité inférieure à celle du corps du soufflet, ce qui a pour conséquence que ce dernier ne présente pas, dans tous les sens, la même souplesse ou aptitude à dissiper les contraintes de flexion ou compression et traction alternées lors de son usage.

En plus, les variations de températures, notamment en saison hivernale où l'on peut enregistrer des températures de moins 20 °C ou même plus basses, entrainent un durcissement de la matière plastique ou élastomère du corps tubulaire, ce qui se traduit par une augmentation et variation particulièrement prononcées de la rigidité dans la zone de la fermeture.

A ce problème s'ajoute l'inconvénient que l'emboîtement des soufflets connus est assez mal élaboré ou adapté pour assurer une longévéité convenable du joint soudé ou encollé, et ceci au niveau de la géométrie des bords raccordés, et de la ténacité de la fermeture achevée. Donc, il s'est avéré que les soufflets connus ne satisfont pas au point de vue durabilité et étanchéité. Dans des conditions normales le joint proprement dit tend à se détacher prématurément. Dans des conditions extrêmes ( basses températures ), le soufflet à l'endroit de l'emboîtement, perd l'élasticité nécessaire aux sollicitations lors du bracage du véhicule, ce qui fait apparaître des fissures qui laissent échapper la graisse, ce qui provoque la détérioration du cardan à plus ou moins long terme.

D'autre part, le système d'emboîtement en " U " dans le sens longitudinal, tel qu'il est démontré pour refermer le soufflet après l'avoir positionné, doit subir de plein fouet, par temps de pluie, la projection d'eau à jets continus, ajoutée à cela la vitesse de rotation, augmentant ainsi la force de pénétration de l'eau. De plus, lors de l'encollage après emboîtement, la colle utilisée agit en dissolution en dissolvant la languette d'emboîtement, agissant en cela comme une soudure par fusion de la matière. L'inconvénient réside en ce que, si l'intervenant ne prend pas garde au débordement de la dissolution, celle-ci dissoud la matière consistante du soufflet là où il n'était pas nécessaire qu'elle agisse et laisse apparaître des trous à l'endroit des dépôts, par conséquent, le soufflet n'est plus étanche.

De plus, pour ce qui concerne l'adaptation sur tous les véhicules européens, il faut savoir que pour la réalisation d'un système dit " Standard ", il est nécessaire de disposer de différents diamètres d'ouverture du soufflet ; à savoir pour le côté roue : qui varie du diamètre 66m/m au diamètre 91m/m - de même pour le côté arbre ou tube : le diamètre varie du diamètre 20 m/m à 40m/m. L'inconvénient réside en ce que le soufflet de protection à montage rapide connu ne dispose pas des diamètres d'ouverture adaptables aux vehicules dont le diamètre côté roue est supérieur au diamètre 81m/m.

La présente invention a pour objet de remédier à ces inconvénients, et de proposer une réalisation nouvelle et particulièrement efficace d'un soufflet de protection à montage rapide adaptable à toutes sortes d'articulations à cardan pour véhicules automobiles.

La présente invention a pour but de résoudre tous les problèmes cités plus haut, y inclus la matière première qui compose le soufflet rapide et son encollage.
L'invention propose également une méthode de pose ou de montage d'un soufflet selon l'invention sur une transmission dite de cardan.

La présente invention ayant pour but principal de remédier aux inconvénients dus aux systèmes et formes d'emboîtement de soufflets connus, a aussi pour objet de résoudre en outre les problèmes dus aux matériaux constituant la jointure du soufflet. Un autre objet de l'invention est de réaliser un soufflet protecteur à montage rapide dont la géométrie est facilement adaptable aux diamètres des arbres de transmission autour de laquelle le soufflet est posé. En plus le soufflet selon la présente invention a pour but de remédier aux projections à jets continus, exemple par temps de pluie, augmentées par la vitesse de rotation, qui tendent à détériorer les côtés de l'emboîtement et finalement à affaiblir et rompre la jointure d'étanchéité protégeant la transmission à cardan.

Ainsi, pour remédier aux inconvénients susdits, selon l'invention, le soufflet de protection pour transmissions à cardan est essentiellement caractérisé par la combinaison des caractéristiques définies dans la revendication indépendante 1.
Des formes de réalisation préférées de la présente invention sont définies dans les sous-revendications.

Les soufflets selon l'invention peuvent être réalisés en un matériau quelconque possédant la flexibilité et ténacité nécessaires à l'application visée et présentant en outre une résistance suffisante à la corrosion générale et à l'attaque par des hydrocarbures, à savoir des huiles moteur, huile de circuit de freins, carburant, etc.

Bien que les soufflets peuvent aussi être fabriqués en un matériau métallique résistant à la corrosion, il est indiqué d'utiliser des matières plastiques ou synthétiques, tels que par exemple des polyéthylènes, des polypropylènes, et de préférence les élastomères thermoplastiques et notamment les polyuréthanes thermoplastiques.

Un matériau particulièrement préféré est le PEBAX 4033, qui est un membre de la famille des élastomères thermoplastiques du type polyéther-block-amide. Les soufflets de protection selon l'invention peuvent être réalisés selon n'importe quel procédé adéquat tel que par exemple par moulage, par souflage, ou par moulage par injection. Un matériau préféré comme le PEBAX 4033 est avantageusement moulé par injection.

D'autres caractéristiques et avantages de l'invention seront mieux compris à la lecture de la description qui va suivre et des exemples de réalisation.

L'invention y sera présentée plus en détail à l'aide d'un exemple de réalisation préféré mais non limitatif, représenté dans les dessins annoncés, dans lesquels :
- la figure 1 est une vue en coupe axiale des deux demi-coquilles constitutives d'un soufflet selon l'invention.
- la figure 2 est une vue en coupe transversale d'un emboîtement ou fermeture du soufflet selon l'invention.
- les figures 3a montrent plus en détail les caractéristiques techniques d'un emboîtement selon l'invention.
- la figure 4 est une vue en coupe longitudinale d'une demi-coquille de soufflet illustrant en détail le parachèvement de ses extrémités opposées fermées.
- la figure 5 représente un joint d'étanchéité servant à adapter les entrées du soufflet à des diamètres donnés de roues et/ou d'arbres d'une transmission à protéger.

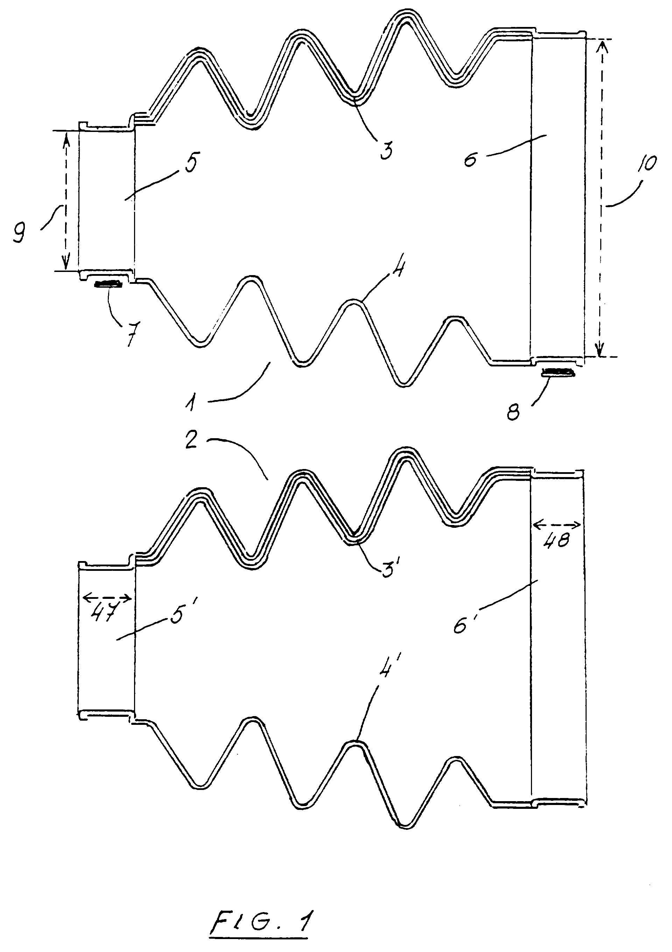

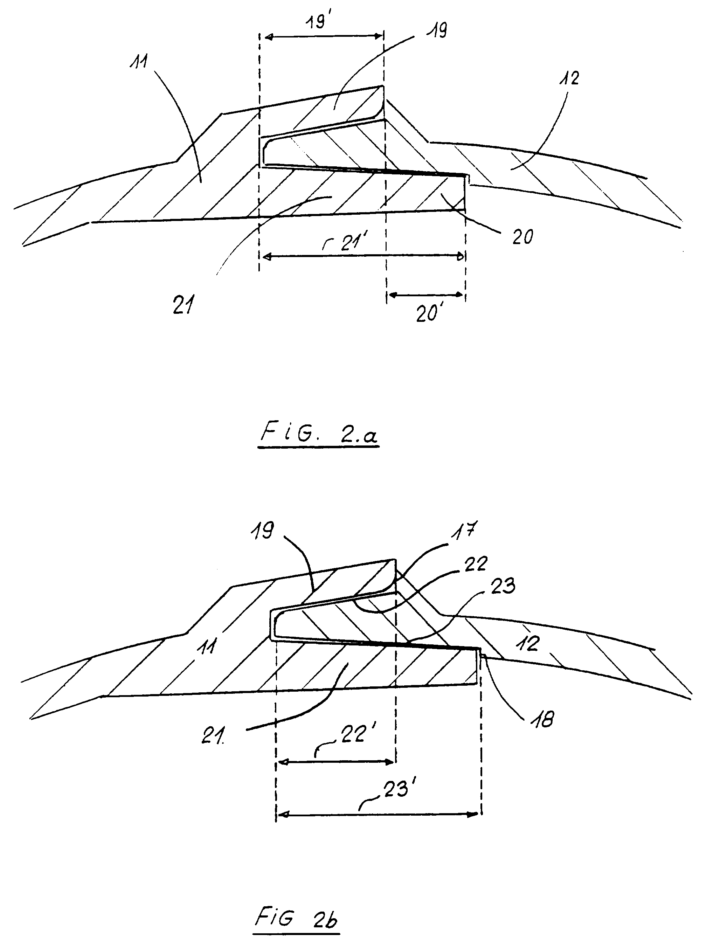

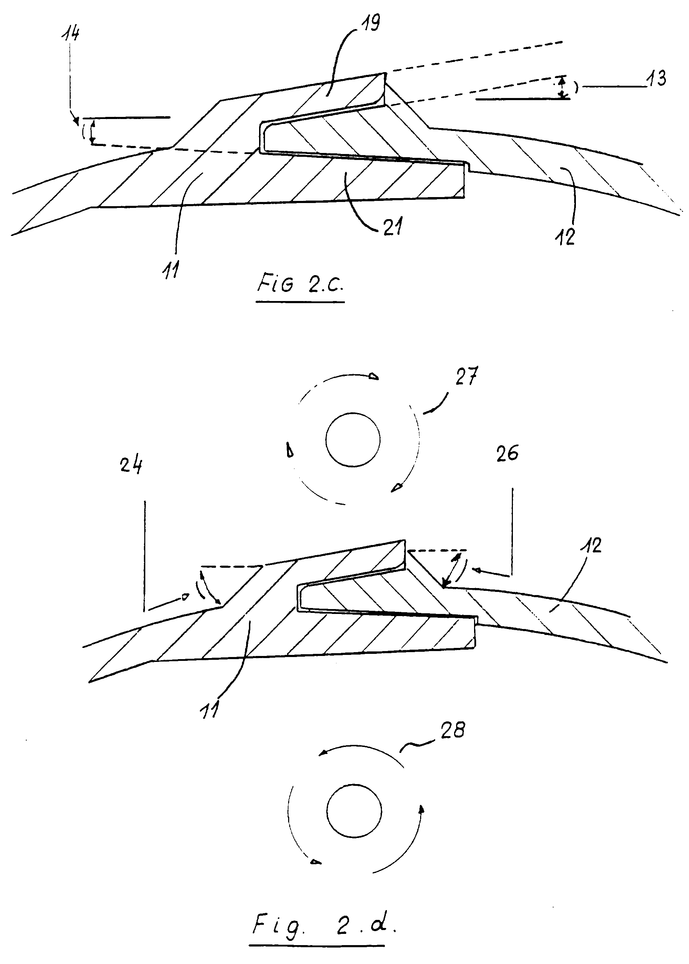

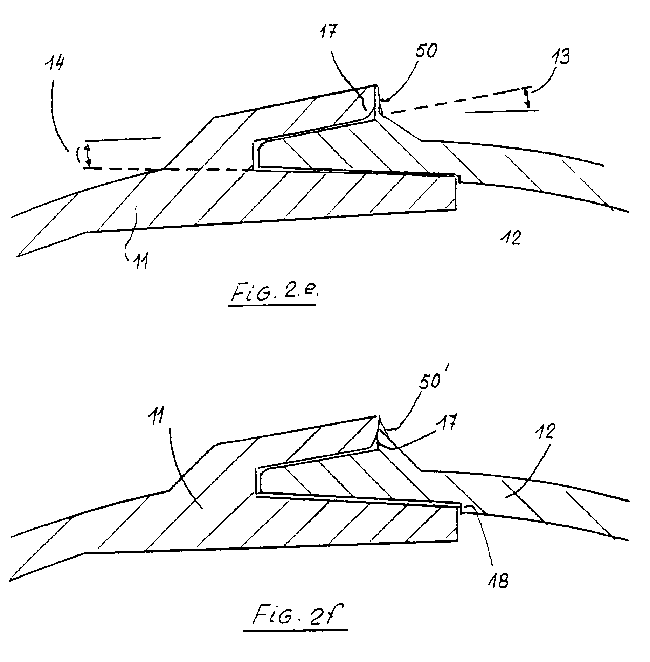

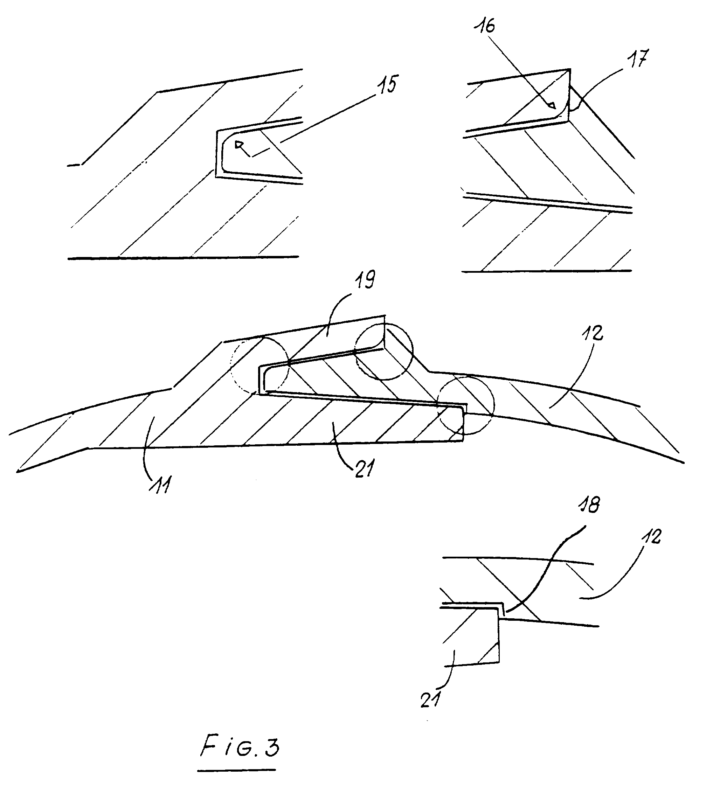

La figure 1 représente un soufflet selon le mode de réalisation préféré de l'invention. le soufflet est composé de deux demi-coquilles (1) et (2) convenablement ondulées. Après assemblage par encliquement de leurs bords longitudinaux respectifs (3,4') et (4,3'), les coquilles ainsi montées et fermées autour d'une articulation à cardan forment un soufflet protecteur flexible et étanche. Les deux extrémités opposées (5,6) du soufflet assemblé forment des manchons de fixation tubulaires sphériques recevant et enveloppant les deux côtés ( p. ex. roue, arbre ) de la transmission à cardan protégée. Les diamètres intérieur (9,10) des manchons jointifs sont adaptés et/ou ultérieurement adaptables aux diamètres des composants constitutifs de l'articulation. Le concept particulier de la fermeture longitudinale proprement dite du soufflet ou des deux fermetures dans la forme de réalisation préférée selon l'invention à partir de deux demi-coquilles hémisphériques, présente des caractéristiques techniques nouvelles d'une efficacité inattendue, qui sont à la base de la présente invention. Ces éléments sont représentés plus en détail aux figures 2 et 3.

A la différence d'une fermeture traditionnelle où les deux bords longitudinaux à raccorder forment une simple rigole en " U " et languette qui s'emboîtent, la fermeture selon l'invention est caractérisée par une structure particulière des deux bords constitutifs de la fermeture par emboîtement. Les figures 2 a-b-c-d, qui donnent des vues en coupe transversale d'une fermeture longitudinale de soufflet selon la présente invention, montrent les détails techniques visant à remédier aux inconvénients dus à l'emboîtement usuel des bords rapportés. Le raccordement des deux manchons (5,6) semi-tubulaires de chaque côté du corps ondulé (1,2) peut être réalisé par un emboîtement usuel en "U".

L'emboîtement longitudinal est composé d'une emboîture (11) et d'un emboîtement (12).

L'emboîture (11) ouverte en regard de la languette (12) comprend une surface de recouvrement supérieure (19) et une semelle d'appui inférieure (21) dont la surface de recouvrement (21') surpasse celle de la partie haute (19') par une partie (20) d'une longueur (20') au moins égale à un quart de la profondeur (19'). L'emboîtement (12) qui n'est autre que la partie mâle de l'assemblage, se compose d'une partie haute (22) et d'une partie basse (23) qui viennent à épouser exactement les surfaces internes (19,21) de l'emboîture. A cet effet la partie haute (22), respectivement la partie basse (23) de la languette, possèdent chacun un rebord (17,18) qui sert de butée de profondeur. Une autre particularité du système d'emboîtement est l'inclinaison différente et opposée (13,14) des surfaces de recouvrement internes (19) et (21) de l'emboîture, de même que les surfaces correspondantes de la partie haute (22) et basse (23) de la languette d'emboîtement (12). La surface de recouvrement (19) est inclinée à un angle (13) d'environ 5° à 20°, de préférence environ 10°, pour faciliter la rentrée de l'emboîtement (12). La semelle d'appui (21) est inclinée à un angle opposé (14) d'environ 1° à 6°, avantageusement à environ 3° d'ouverture, pour faciliter l'engagement de l'emboîtement (12), voir la figure 2c.

Une autre mesure avantageuse pour améliorer la fermeture assemblée selon l'invention est de prévoir un angle d'attaque (24,26) incliné à environ 40° à 50°, de préférence environ 45°, sur les deux extrémités opposées ( côté extérieur, fermé de l'emboîture, resp. côté extérieur de l'emboîtement ) de la fermeture. Ces surfaces inclinées en sens opposé ont pour effet d'agir en brise-jet, c.à.d. rompre les projections d'eau par temps de pluie qui pourraient attaquer et dégrader la fermeture achevée. Le brise-jets (24) est effectif dès que la rotation s'exerce dans le sens (27). Le même effet se produit pour le brise-jet (26) incliné à sensiblement le même angle que (24) mais dans le sens inverse, dès que la rotation va dans le sens (28). Les caractéristiques structurales et géométriques de l'emboîtement longitudinal des bords rapportés du soufflet selon l'invention, telles que décrites et expliquées ci-dessus, ont pour effet de réaliser une fermeture solide et précise, facile à emboîter et résistant aux projections de pluie.

En outre la structure géométrique de l'emboîtement assemblé évite une surépaisseur locale trop élevée et trop brusque, de sorte que le soufflet selon l'invention possède une meilleure flexibilité et une résistance améliorée aux sollicitations alternées par rapport aux soufflets de l'art antérieur.

Un autre objet important du nouveau système d'emboîture et emboîtement est de remédier aux problèmes de soudure et/ou d'encollage des éléments rapprochés constitutifs de la fermeture, afin de réaliser un joint adhésif solide, étanche et durable. Selon la figure 3 il est prévu à cet effet en premier lieu un emboîtement précis en profondeur grâce aux butés (17,18), ce qui permet de réaliser une épaisseur uniforme de la couche adhésive joignant les parties encollées hautes (19,22) et basses (21,23) s'épousant dans l'emboîtement assemblé. En outre le joint adhésif entre les surfaces de recouvrement possède au moins un cordon de sécurité dans le sens logitudinal d'assemblage. L'on remarque que l'angle (15) à l'extrémité rentrante de la languette (12) a été supprimé dans le but de créer un vide, égal à par exemple 0,1 mm, qui sera comblé automatiquement par la colle formant ainsi un cordon de sécurité. L'angle (16) en regard de la butée (17) a la même fonction que la partie (15). Bien que lesdits deux cordons soient largement suffisants, on pourrait aussi prévoir un cordon analogue à l'autre extrémité rentrante de la languette et à la partie basse de l'emboîture en regard de la butée (18).

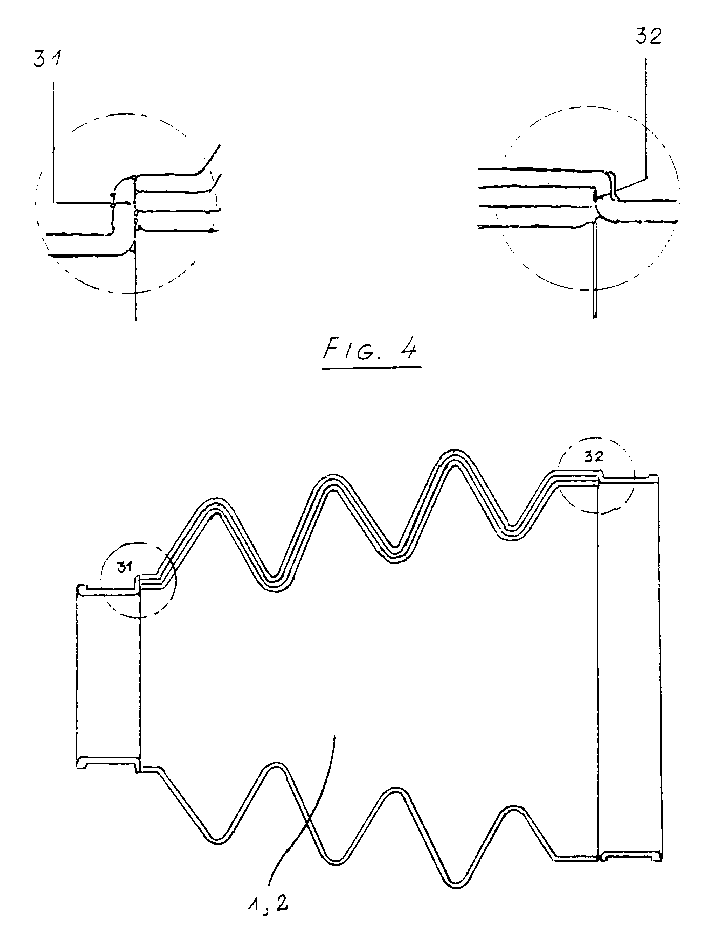

La figure 4 montre une autre particularité du soufflet de la présente invention. Aux deux côtés opposés du corps ondulé on a prévu des parois de fermeture (31) et (32) placées chacune aux deux extrémités de l'emboîture (11). Ces parois de fermetures permettent de guider l'emboîtement (12) lors de l'assemblage des demi-coquilles (1) et (2) de manière à éviter un décalage dans le sens longitudinal et servent donc à encliqueter l'emboîtement sans erreur possible de positionnement.

La présente invention a pour but de résoudre aussi les inconvénients dus à la difficulté d'adaptation, dit " standard " du soufflet, sur tous les véhicules automobiles du type V.L. et véhicules industriels. En effet, l'inconvénient réside en ce que les soufflets connus jusqu'ici, ne disposent pas de diamètre d'ouverture supérieur à 81 m/m côté roue.

La présente invention répond à cette difficulté, en créant des modèles de base ( par exemple quatre ) de soufflet rapide, dont chacun aura des diamètres d'ouverture côté roue et côté arbre répertoriés comme suit.

### Le modèle I.

Une fois les deux demi-coquilles assemblées (1) et (2), le diamètre intérieur du soufflet côté roue (10) sera de 75m/m et le diamètre intérieur du soufflet côté arbre (9) sera de 32m/m.

### Le modèle II.

Une fois les deux demi-coquilles assemblées (1) et (2), le diamètre intérieur du soufflet côté roue (10) sera de 78m/m et le diamètre intérieur du soufflet côté arbre (9) sera de 43m/m.

### Le modèle III.

Une fois les deux demi-coquilles assemblées (1) et (2), le diamètre intérieur du soufflet côté roue (10) sera de 88m/m et le diamètre intérieur du soufflet côté arbre (9) sera de 43m/m.

### Le modèle IV.

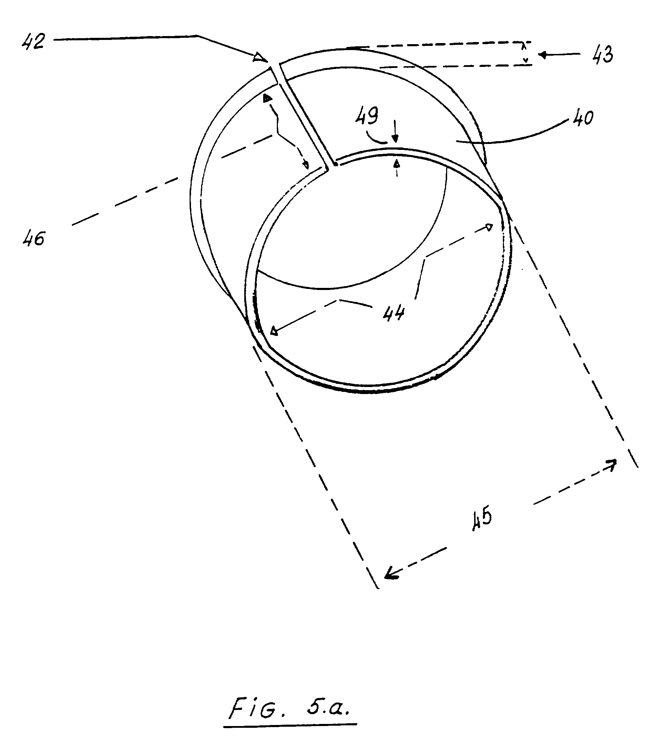

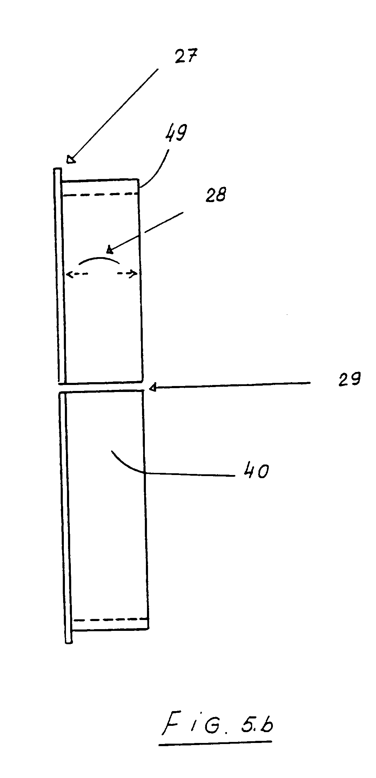

Une fois les deux demi-coquilles assemblées (1) et (2), le diamètre intérieur du soufflet côté roue (10) sera de 94m/m et le diamètre intérieur du soufflet côté arbre (9) sera de 43m/m.
Pour ces modèles de base de soufflet rapide on a prévu en outre des joints adaptables (40) ( voir la figure 5 ). Le rôle du joint est d'une part de pourvoir à l'étanchéité du soufflet, à la fois côté arbre et côté roue, et d'autre part de réduire le diamètre des deux extrémités du soufflet, de manière à donner une plus grande étendue d'adaptation du soufflet. L'on disposera donc d'une gamme étendue de joints de différentes épaisseurs adaptables selon la demande.

Comme illustré dans les figures 5a et 5b, le joint (40) est de forme sphérique, coupé dans le sens longitudinal (42,29) pour faciliter sa mise en place. Il est muni d'un épaulement sphérique (43,27) qui sert de butée extérieure. Sa largeur ( ou profondeur ) (46,28 ) sera standard égale aux entrées soufflet (47) et (48). Le diamètre extérieur du joint (45) sera soit pour la série côté roue égale au diamètre intérieur du soufflet (10) et la série côté arbre égale au diamètre intérieur du soufflet (9). Seul le diamètre intérieur ou l'épaisseur (49) (44) sera variable de manière à pourvoir à l'adaptation de la demande.

Un exemple spécifique de soufflet rapide selon l'invention est composé de deux demi-coquilles hémisphériques ondulées dont les bords longitudinaux rapportés formant emboîture et languette de deux fermetures opposées à 180°, possèdent avantageusement les dimensions suivantes :
l'emboîture (11) comprend une surface de recouvrement (19) sur 3 mm de profondeur au point haut et une semelle d'appui de 5 mm de profondeur au point bas. La surface haute (19) est inclinée à un angle d'ouverture de 10°. La semelle d'appui (21) est inclinée à 3° d'ouverture. La partie haute (22), resp. basse (23) de la languette d'emboîtement (12), qui vient d'épouser la surface interne de l'emboîture (11), possède sensiblement les mêmes angles d'ouverture indiqués ci-dessus. L'angle d'attaque (24,26) est incliné à 45°. L'angle (15) à l'extrémité de la languette rentrante, de même que l'angle (16) de l'extrémité de l'emboîture en regard de la butée (17), ont été supprimés de manière à créer un vide égal à 0,1 mm afin de former deux cordons de sécurité. La partie extérieure (50,50') de la butée (17) est parachevée de façon à recouvrir l'extrémité de la partie haute de l'emboîture (11) sur l'épaisseur entière de celle-ci afin de former une transition progressive et bien fermée entre emboîture et emboîtement ( voir fig. 2e-f).

L'invention concerne également une utilisation d'un procédé de montage d'un soufflet protecteur rapide tel que décrit ci-dessus.

La description ci-après consiste au détail d'une pose de l'invention sur une transmission dite de cardan, en condition réelle d'exécution.

La première opération consiste à la dépose du soufflet de cardan défectueux, au nettoyage complet et à regarnir le cardan de graisse spécifique.

Cette dernière opération réalisée, assembler les deux demi-coquilles correspondantes au diamètre du cardan, à supposer (1) et (2).

Verser la colle dans la rainure (3') de l'emboîture (11) de la demi-coquille (2), rentrer l'emboîtement (4,12) de la demi-coquille (1). La même opération est aussi effectuée pour les manchons de sortie et d'entrée.

Une fois ce premier assemblage réalisé, l'invention se présente avec une ouverture longitudinale (3', 4') qui permet le passage de l'arbre de transmission ; et l'on assemble les parties (3) et (4') de la même manière que (3') et (4).

L'invention se présente alors comme un soufflet étanche de cardan traditionnel.

L'on procède à la pose du joint d'étanchéité correspondant côté roue. L'ouverture (42) permet son engagement. L'on emboîte le joint dans l'ouverture (10), après avoir préalablement déposé un cordon de colle sur les parties (27) et (28) et les deux lèvres de l'ouverture (42).

L'épaulement (27) viendra s'appuyer sur le bord extérieur de l'ouverture (10). La profondeur (28) du joint s'engagera pour venir butter sur l'arête circulaire interne (8).

L'échanchéité côté arbre sera réalisée de la même manière par un joint correspondant au diamètre de l'arbre.

Après encollage des parties (27) et (28) et les deux lèvres de l'ouverture (42) de même l'épaulement (27) viendra s'appuyer sur le bord extérieur de l'ouverture (9). La profondeur (28) du joint s'engagera pour venir buter sur l'arêté circulaire interne (7).

La dernière opération consiste à placer le soufflet dans sa position définitive de protection du cardan. Le maintien des deux extrémités du soufflet est ensuite garanti par un collier de ligature inox (7,8).

Pour le côté roue, le collier est logé dans la gorge (6) et serré définitivement. Pour le côté arbre dans la gorge (5) est de même serré définitivement.

Bien entendu, l'invention n'est pas limitée aux exemples de réalisation ci-dessus décrits et représentés, à partir duquel on pourra prévoir diverses modifications, sans pour cela sortir du cadre de l'invention tel que défini dans les revendications suivantes.

## Revendications

1. Soufflet d'étanchéité à montage rapide pour la protection de joints à articulation, notamment des joints de transmission, de guidage et de direction, en particulier des articulations dite à cardan pour automobiles, ledit soufflet se présentant essentiellement comme un corps ondulé tubulaire (1,2) avec manchons (5,6) d'entrée et de sortie en un matériau d'une flexibilité convenable possédant au moins une fermeture par emboîtement des bords (3,4) rapportés dans le sens longitudinal sur toute la longueur du soufflet, lesdits bords (3,4) formant chacun emboîture (11) en " U " et languette d'emboîtement (12) rentrant dans l'emboîture (11), caractérisé en ce que l'extrémité ouverte de l'emboîture (11) comprend une partie supérieure de recouvrement (19) inclinée vers le haut et une semelle d'appui (21) formant surface de recouvrement inférieure surpassant la profondeur de la surface de recouvrement au point haut et inclinée vers le bas, et en ce que la languette d'emboîtement (12) venant épouser la surface intérieure de ladite emboîture (11) et présentant les mêmes inclinaisons opposées à celle-ci, comprend deux butées de profondeur (17,18) s'appuyant contre la partie supérieure de recouvrement (19), respectivement contre la semelle d'appui (21) de l'extrémité ouverte de l'emboîture (11), et en ce que la surface extérieure de l'emboîture (11) et de la languette d'emboîtement (12) au point de la fermeture sont inclinés en sens opposé de manière à constituer un brise-jets pour les projections de pluie dans les deux sens de rotations.

2. Soufflet selon la revendication 1, caractérisé en ce que le corps ondulé est composé de deux demi-coquilles hémisphériques (1,2) présentant deux fermetures longitudinales opposées après assemblage par emboîtement de leurs bords rapportés (3,4;4',3'), lequelles fermetures se prolongent par une jointure par emboîtement en "U" des bords constitutifs des manchons semi-tubulaires d'entrée et de sortie (5,6;5',6').

3. Soufflet selon la revendication 1 ou 2, caractérisé en ce que le joint formé après encollage et assemblage de l'emboîture (11) et la languette (12) présente au moins un cordon adhésif de sécurité au niveau de l'extrémité haute rentrée (15) de la languette et/ou au niveau de la butée d'emboîtement en regard de l'extrémité supérieure (16) de l'emboîture, le(s)dit(s) cordon(s) étant formé(s) par supprimation des angles desdites extrémités de façon à créer un vide dans le sens longitudinal de l'emboîtement, lequel vide se comble du liquide adhésif appliqué.

4. Soufflet selon l'une quelconque des revendications 1 à 3, caractérisé en ce que la partie haute (19) de l'emboîture (11) présente un angle d'ouverture (13) d'environ 5 à 20°, de préférence d'environ 10°, et en ce que l'inclinaison opposée (14) de la semelle d'appui (12) présente un angle d'ouverture d'environ 1 à 10°, de préférence environ 3°.

5. Soufflet selon l'une quelconque des revendications 1 à 4, caractérisé en ce que l'angle d'attaque (24) des faces extérieures opposées de la partie haute de l'emboîtement est comprise entre environ 40° et environ 50°, de préférence égal à environ 45°.

6. Soufflet selon l'une quelconque des revendications 1 à 5, caractérisé en ce que les deux extrémités longitudinales (31, 32) de l'emboîture présentent chacune une paroi de fermeture s'appuyant contre les manchons d'entrée (5,6) tubulaires du corps ondulé du soufflet.

7. Soufflet selon l'une quelconque des revendications 1 à 6, caractérisé en ce que le corps du soufflet est composé d'un matériau thermoplastique élastomère, de préférence type PEBAX ( polyéther . Block - Amide ), et en ce que la fermeture est fixée par encollage moyennant un adhésif excluant la dissolution de la matière du soufflet.

8. Soufflet selon l'une quelconque des revendications 1 à 7, caractérisé en ce qu'il comporte en outre des joints adaptables (40) présentant un corps tubulaire coupé axialement (42) à epaisseur variable (49), le diamètre extérieur (45) desdits joints étant sensiblement égal au diamètre intérieur des manchons d'entrée et de sortie du soufflet.

## Patentansprüche

1. Schnell montierbarer Dichtungsfaltenbalg zum Schutz von Achsgelenken, wie Kupplungs- und Steuerungsgelenken, inbesondere von Kardangelenken, der als rohrförmiger Faltenkörper (1,2) mit Anschlussmanschetten (5,6) für Gelenkeingang, bzw. Ausgang gestaltet ist aus einem elastischen Material, mit zumindest einer Schließverbindung mit ineinandergreifenden benachbarten Kanten (3,4), die sich über die Gesamtlänge des Faltenbalgs erstrecken und jeweils als "U"-förmige Nut (11) und einfügbare Feder (12) ausgebildet sind, dadurch gekenzeichnet, dass das offene Nutende ein übergreifendes Oberteil (19) mit nach oben geneigten Winkel und eine Stützsohle (21) aufweist, welche eine untere Übergreifungsflanke mit größerer Länge als des Oberteils bildet und nach unten geneigt ist, und dass die Feder (12), mit dem Nutinnern entsprechenden gegenseitigen Neigungswinkeln der Einfügseiten, zwei Anschläge (17,18) aufweist, die sich jeweils gegen das äusserste Ende des Nutoberteils und gegen die Sohle der Nut abstützen, und dass die äussere Leitflächen von Nut und Feder an deren Lippverbindung in gegenseitiger Richtung geneigt sind, derweise dass sie einen Jetbrecher gegen die in zwei Umdrehungsrichtungen anfällenden Regenwassereinschläge bilden.

2. Faltenbalg nach Anspruch 1, dadurch gekenzeichnet, dass der Faltenkörper besteht aus zwei hemisphärischen Kokillenhälften (1,2), die nach Montierung zwei gegenüberliegende dichtende Längsverschliessungen mit ineinandergreifender Nut/Feder-Verbindung deren entsprechenden Kanten (3,4;4',3') bilden, wobei die Längsverschliessungen weitergeführt werden in eine U-Schliessverbindung durch die entsprechenden Kanten der halb-rohrförmigen Endmanschetten (5,6;4',6').

3. Faltenbalg nach Anspruch 1 oder 2, dadurch gekennzeichnet, dass die nach Einkleben und Zusammenfügen hergestellte"Nut (11) und Feder (12)"-Verbindung zumindest einen Sicherheitsklebnaht aufweist, auf der Höhe des eingesteckten obenliegenden Aussenende (15) der Feder und/oder auf der Höhe des Verbindungsanschlags gegenüber dem äussersten Obenende (16) der Nut, wobei genannter Naht ausgebildet wird durch einen entfernten Kantenwinkel der besagten äussersten Enden, sodass ein Hohlraum in der Längsrichtung der Feder/Nut-verbindung gebildet wird, welcher sich mit Klebflüssigkeit ausfüllen Kann.

4. Faltenbalg nach einem der Ansprüche 1 bis 3, dadurch gekennzeichnet, dass das obenliegende Teil (19) der Nut (11) einen Öffnungswinkel von etwa 5 bis 20° bildet, vorzugsweise etwa 10°, und dass die gegenseitige Neigung (14) der Stützsohle einen Öffnungswinkel von etwa 1 bis 10°, vorzugsweise etwa gleich 3° bildet.

5. Faltenbalg nach einem der Ansprüche 1 bis 4 dadurch gekennzeichnet, dass der Brecherwinkel (24) der gegenüberliegenden Aussenseiten des Oberteils der Feder/Nut-Verbindung einen Wert zwischen etwa 40° und etwa 50° umfasst, vorzugsweise etwa gleich 45°.

6. Faltenbalg nach einem der Ansprüche 1 bis 5 dadurch gekennzeichnet, dass die zwei Stirnflächen (31,32) am Ende der Längsnut jeweils eine Schliesswandung bilden, die sich abstützt gegen die rohrförmigen Endmanschetten (5,6) des Faltenbalgs.

7. Faltenbalg nach einem der Ansprüche 1 bis 6, dadurch gekennzeichnet, dass der Faltenbalgkörper besteht aus einem elastomeren thermoplastischen Werkstoff, vorzugsweise aus einem PEBAX-Harz (Polyether-Block-Amide), und dass die Feder/Nut-Verschliessung verfestigt ist durch Verklebung mittels einem Flüssigklebstoff , der keine Auflösung des Faltenbalgmaterials hervorruft.

8. Faltenbalg nach einem der Ansprüche 1 bis 7, dadurch gekennzeichnet, dass dieser zusätzlich anpassbare Dichtungsringe (40) mit einem axial geschlitzten rohrförmigen Körper (42) veränderliche Dicke umfasst, wobei der Aussendurchmesser (45) genannter Ringe etwa dem Innendurchmesser der Endmanschetten entspricht.

## Claims

1. A rapid-assembly sealing bellows for protecting jointed couplings such as transmissions, guiding and steering joints, in particular so-called cardan or universal joints of motor vehicles, said bellows being essentially a corrugated tubular body (1,2) with entry and exit sleeves (5,6) from a material of adequate flexibility, comprising at least one jointing closure formed by lateral interlocking of adjacent divided edges (3,4) running in the longitudinal direction from entry to exit of said tubular body, each of said edges forming respectively a U-shaped interlock housing (11) and an interlocking tongue (12) receivable into said housing, characterized in that the opening end front of the interlock housing comprises an upper covering leg (19) which is inclined in an upward direction and a supporting sole (21) forming a lower covering surface which extends beyond said upper covering surface and which is inclined in a downward direction, and in that the interlocking tongue (12), which is closely received into the U-shaped housing by the matching interior surfaces thereof and presents the same surface inclinations as the housing but in opposite sense, comprises depth abutments (17,18) resting respectively against the open end face of the upper leg and against the end face of the lower supporting sole, and in that the opposite outer faces of the interlock housing and the entering tongue, when assembled, are inclined in the opposite direction so as to form facing breaker surfaces which function as jet breakers for rain water projected in the two rotational directions.

2. Bellows as defined in claim 1, characterized in that the corrugated body is composed of two hemispherical/semi-tubular shell halves (1,2) which form two longitudinal but diametrically opposed jointing closures after interlocking together respective adjacent side edges (3,4;4',3'), which jointing closures are extending into the semi-tubular end sleeves (5,6;5',6') of the bellows by an interlocking U-type joint formed by the assembled edges thereof.

3. Bellows according to claim 1 or 2, characterized in that the jointing closure formed after glue application and assembling the interlock housing (11) and the tongue (12), presents at least one adhesive security seam disposed at the upper side (15) of the end face of the inserted tongue and/or at the abutment facing the upper leg end face (16) of the interlock housing, said seam(s) being formed by a removed edge angle of said end faces so as to create an empty space along the length of the interlocking joint which void becomes filled with applied adhesive liquid.

4. Bellows according to claims 1 to 3, characterized in that the upper leg (19) of the interlock housing (11) has an opening angle of about 5 to 30 degrees, preferably of about 10 degrees, and in that the opposed inclination (14) of the supporting sole (12) forms an opening angle of about 1 to 10 degrees, preferably of about 3 degrees.

5. Bellows according to claims 1 to 4, characterized in that the breaker angle (24) of the facing outer surfaces of the upper part of the interlocked joint is comprised between about 40 and about 50 degrees, preferably equal to about 45 degrees.

6. Bellows according to claims 1 to 5, characterized in that the two end faces (31,32) of the interlock housing in the longitudinal direction thereof have each a terminal closure wall which rests against the tubular entry sleeves (5,6) of the corrugated bellows body.

7. Bellows according to claims 1 to 6, characterized in that the bellows is made of a thermoplastic elastomer material, preferably of the kind Polyether-Block-Amide (PEBAX), and in that the jointing closure is sealingly fixed by gluing with a liquid adhesive which excludes a dissulution of the used bellows material.

8. Bellows according to claim 1 to 7, characterized in that it additionally comprises adaptable sealing joints (40) featuring an axially slitted tubular shape (42) of variable thickness (49), whereby the outer diameter (45) of said joints is essentially equal to the inside diameter of the entry and exit sleeves of said bellows.
